# EUROPÄISCHE PATENTANMELDUNG

(11) **EP 3 091 360 A1**
(43) Veröffentlichungstag der Anmeldung: **09.11.2016**
(21) Anmeldenummer: 15166427.3
(22) Anmeldetag: 05.05.2015
(51) Int. Cl.: G01N 35/00

(54) **VERFAHREN ZUM BETRIEB EINES AUTOMATISCHEN ANALYSEGERÄTS IN UNTERSCHIEDLICHEN BETRIEBSMODI**

(71) Anmelder: Siemens Healthcare Diagnostics Inc., Tarrytown, NY 10591-5098 (US)
(72) Erfinder: Anderle, Klaus, 61476 Kronberg (DE); ODonoghue, Kieran, Dundalk Co. Louth Ireland (IE); Steinebach, Wolfgang, 56414 Salz (DE)
(74) Vertreter: Maier, Daniel Oliver

(57) **Zusammenfassung**

Die vorliegende Erfindung betrifft ein automatisches Analysegerät sowie ein Verfahren zum Betrieb des automatischen Analysegeräts in voneinander unterschiedlichen Betriebsmodi, das Verfahren umfassend einen Normalbetriebsmodus (8) und einen ersten (7) Bereitschaftsmodus, wobei das Analysegerät eine Messeinheit mit einer Lichtquelle zur photometrischen Messung einer Probe und eine Steuereinheit zur Steuerung der Betriebsspannung der Lichtquelle umfasst.

## Beschreibung

Die Erfindung liegt auf dem Gebiet der automatischen Analysegeräte, z.B. für die In-Vitro-Diagnostik und betrifft ein automatisches Analysegerät sowie ein Verfahren zum Betrieb eines automatischen Analysegeräts in voneinander unterschiedlichen Betriebsmodi, wobei das Analysegerät eine Messeinheit mit einer Lichtquelle zur photometrischen Messung einer Probe und eine Steuereinheit zur Steuerung der Betriebsspannung der Lichtquelle umfasst.

Zahlreiche Nachweis- und Analyseverfahren zur Bestimmung physiologischer Parameter in Körperflüssigkeitsproben wie Blut, Plasma, Serum oder Urin oder in anderen biologischen Proben werden heute automatisiert in entsprechenden Analysegeräten durchgeführt.

Heutige Analysegeräte sind in der Lage, eine Vielzahl verschiedenartiger Nachweisreaktionen und Analysen mit einer Vielzahl von Proben durchzuführen. Gängige Analysegeräte, wie sie im klinischen Labor oder in Blutbanken zum Einsatz kommen, umfassen üblicherweise einen Bereich für die Zuführung von Probengefäßen, die die zu analysierenden Primärproben enthalten. Zur Einspeisung der Probengefäße in das Analysegerät ist üblicherweise ein Transportsystem vorgesehen, das die Probengefäße zunächst zu einer Probenidentifikationseinrichtung transportiert, die probenspezifische Informationen, die auf einem Probengefäß angebracht sind, erfasst und in eine Speichereinheit weiterleitet. Anschließend werden die Probengefäße zu einer Probenentnahmestation transportiert. Mit Hilfe einer Probenpipettiereinrichtung wird dort mindestens ein Aliquot der Probenflüssigkeit aus einem Probengefäß entnommen und in ein Reaktionsgefäß transferiert.

Bei den Reaktionsgefäßen handelt es sich in der Regel um Einwegküvetten, die in einem Küvettenbehälter im Analysegerät vorrätig gehalten werden und die automatisch aus dem Vorratsbehälter in definierte Aufnahmepositionen transferiert werden. Es existieren jedoch auch Geräte, bei denen die Küvetten mehrfach verwendet werden, indem sie vor dem nächsten Gebrauch gewaschen werden. Die Reagenzien, die für die Bereitstellung von verschiedenartigen, testspezifischen Reaktionsansätzen erforderlich sind, befinden sich in Reagenzbehältern, die in einer Reagenzstation aufbewahrt werden. Die Reagenzbehälter werden dem Analysegerät entweder automatisch oder manuell zugeführt.

Die Reagenzstation verfügt üblicherweise über eine Kühleinheit, um eine möglichst lange Haltbarkeit der Reagenzien sicherzustellen. Mit Hilfe einer Reagenzpipettiereinrichtung, die im Übrigen häufig eine Heizvorrichtung aufweist, wird ein Aliquot eines oder mehrerer Reagenzien in ein Reaktionsgefäß transferiert, in dem sich bereits die zu untersuchende Probe befindet. Je nach Art der biochemischen Reaktion, die durch die Zugabe der Reagenzien zu einer Probe in Gang gesetzt wird, kann eine unterschiedlich lange Inkubationszeit des Reaktionsansatzes erforderlich sein. In jedem Fall wird das Reaktionsgefäß mit dem Reaktionsansatz schließlich einem Messsystem zugeführt, das eine physikalische Eigenschaft des Reaktionsansatzes misst.

Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien im Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Neben den beschriebenen wesentlichen Funktionen verfügt ein automatisches Analysegerät über eine Vielzahl weiterer Komponenten, wie beispielsweise Schrittmotoren zum Antrieb von Pipettiereinrichtungen, Küvettengreifern oder anderen beweglichen Einrichtungen, Temperatursensoren, Drucksensoren, Bewegungssensoren, Flüssigkeitsleveldetektoren, Heizelemente, Ventilatoren, Lichtquellen und viele mehr. Das hochkomplexe Zusammenspiel aller Komponenten und Funktionen eines automatischen Analysegeräts wird durch eine zentrale Steuereinheit, üblicherweise in Form eines Personal Computers mit Speichermedium, Recheneinheit, Bildschirm und Tastatur, gesteuert.

Um all diese Funktionen und Komponenten zu betreiben, muss dem automatischen Analysegerät elektrische Energie zugeführt werden. Problematisch ist vor allem der Stromverbrauch des Analysegerätes, wenn es keine Tests durchführt, aber in Einsatzbereitschaft gehalten wird. Ist das Analysegerät nicht im Einsatz, d.h. sind keine Analysen angefordert, ist es üblich, Analysegeräte in einen Bereitschaftsmodus zu versetzen. Dazu werden diverse Funktionen des Gerätes wie z.B. bewegliche Einrichtungen, Heizungen oder Lichtquellen abgeschaltet, und die zentrale Steuereinheit wird in einen internen Ruhemodus versetzt, um den Stromverbrauch zu senken. Nachteilig ist jedoch, dass die Wiederherstellung des Normalbetriebsmodus umso länger dauert, je mehr Komponenten des Analysegerätes abgeschaltet sind.

Da die Wiederherstellung des Normalbetriebsmodus jedoch möglichst wenig Zeit in Anspruch nehmen darf, insbesondere in klinischen Laboren, die jederzeit auf die Bearbeitung von Notfallproben vorbereitet sein müssen, wird typischerweise die gesamte Elektronik des Geräts unter Strom gehalten, so dass das Gerät sehr schnell wieder in Betrieb genommen werden kann. In allen Fällen bleiben jedoch die Lichtquellen unter Strom, die zur photometrischen Messung von Proben verwendet werden, da diese Lichtquellen vergleichsweise lange Einschalt- und Vorwärmzeiten benötigen, um in den Betriebszustand versetzt werden zu können. Dadurch ergibt sich ein erheblicher Stromverbrauch des Geräts auch während Zeiten der Nichtnutzung. Weiter müssen die Lichtquellen häufig ausgewechselt werden, da die Lebensdauer der Lichtquellen unter Betriebsspannung sehr begrenzt ist. Dadurch ergibt sich ein erheblicher Wartungs- und Kostenaufwand.

Es ist daher Aufgabe der Erfindung, ein automatisches Analysegerät und ein Verfahren bereit zu stellen, mit dem ein automatisches Analysegerät in einem Bereitschaftsmodus betrieben werden kann, das den Stromverbrauch erheblich senkt und die Lebensdauer der Lichtquellen erhöht und gleichzeitig eine möglichst rasche Wiederherstellung des Normalbetriebsmodus ermöglicht.

**Diese Aufgabe wird erfindungsgemäß durch die im Folgenden beschriebenen Gegenstände und Verfahren gelöst.**

Diese Aufgabe wird gelöst, indem ein automatisches Analysegerät mit einer Messeinheit mit einer Lichtquelle zur photometrischen Messung einer Probe und zusätzlich mit einer Steuereinheit zur Steuerung der Betriebsspannung der Lichtquelle ausgestattet ist, wobei die Steuereinheit so konfiguriert ist, dass sie ein Verfahren zum Betrieb des automatischen Analysegeräts in voneinander unterschiedlichen Betriebsmodi steuert und das Verfahren die folgenden Verfahrensschritte umfasst:
- Betrieb der Lichtquelle mit einer ersten Betriebsspannung im Normalbetriebsmodus des Analysegeräts,
- Verringern der an der Lichtquelle anliegenden ersten Betriebsspannung auf eine zweite Betriebsspannung bei der Aktivierung des ersten Bereitschaftsmodus aus dem Normalbetriebsmodus des Analysegeräts,
- Betrieb der Lichtquelle mit der zweiten Betriebsspannung im ersten Bereitschaftsmodus des Analysegeräts, wobei die zweite Betriebsspannung 60 % bis 95 % der ersten Betriebsspannung beträgt.

Es wurde gefunden, dass eine Verlängerung der Nutzungsdauer der Lichtquelle dadurch erreicht werden kann, dass die Betriebsspannung der Lichtquelle in Zeiten, in denen die Lichtquelle nicht für photometrische Messungen benötigt wird, jedoch jederzeit innerhalb kurzer Zeit für photometrische Messungen zur Verfügung stehen muss, verringert wird. Jedoch darf die Lichtquelle nicht vollständig abgeschaltet werden, da sonst die Zeit, die benötigt würde um die Lichtquelle einzuschalten und aufzuwärmen bis sie für photometrische Messungen zur Verfügung steht, zu lange wäre. Um für eine photometrische Messung zur Verfügung zu stehen, muss nämlich beim Einschalten einer zuvor vollständig abgeschalteten Lichtquelle eine entsprechend lange Aufwärmphase eingehalten werden um sicherzustellen, dass die Lichtquelle ihren Betriebszustand mit der benötigten spektralen Lichtverteilung und Lichtmenge erreicht hat. Wird hingegen eine Lichtquelle mit nur 60 % bis 95 % ihrer Betriebsspannung des Normalbetriebsmodus betrieben, wird einerseits die Lebensdauer der Lichtquelle wesentlich erhöht, andererseits steht die Lichtquelle in vergleichsweise kurzer Zeit für photometrische Messungen wieder zur Verfügung, wenn die Betriebsspannung wieder auf 100 % Ihrer Betriebsspannung des Normalbetriebsmodus erhöht wird. Weiter wird bei Betrieb der Lichtquelle mit entsprechend reduzierter Betriebsspannung neben der Erhöhung der Lebensdauer auch eine Verringerung des Strombedarfs erreicht, was Kostenvorteile bringt und natürliche Ressourcen schont.

In bevorzugter Ausführungsform umfasst das Verfahren weiter den Verfahrensschritt
- Erhöhung der an der Lichtquelle anliegenden zweiten Betriebsspannung auf die erste Betriebsspannung bei der Aktivierung des Normalbetriebsmodus aus dem ersten Bereitschaftsmodus des Analysegeräts.

Dies hat den Vorteil, dass die Lichtquelle in vergleichsweise kurzer Zeit für photometrische Messungen wieder zur Verfügung steht.

In bevorzugter Ausführungsform des Verfahrens beträgt die zweite Betriebsspannung 85 % bis 95 % der ersten Betriebsspannung. In besonders bevorzugter Ausführungsform des Verfahrens beträgt die zweite Betriebsspannung 90 % der ersten Betriebsspannung.

Dies hat den Vorteil, dass sich aufgrund der weniger stark abgesenkten Betriebsspannung der Lichtquelle im ersten Bereitschaftsmodus weniger Ablagerungen auf der Innenseite des Glases der Glühbirne von Material aus der Glühwendel bilden. Diese Ablagerungen werden in den meisten Fällen bei Betrieb der Lichtquelle im Normalbetriebsmodus wieder nahezu vollständig oder vollständig abgebaut. Eine Absenkung der Betriebsspannung im Bereitschaftsmodus auf 90 % der Betriebsspannung im Normalbetriebsmodus bewirkt eine um etwa den Faktor 10 verlängerte Lebensdauer der Lichtquelle beim Betrieb der Lichtquelle.

In bevorzugter Ausführungsform der Erfindung umfasst die Lichtquelle mindestens eine Halogenlampe. Dies hat den Vorteil, dass eine vergleichsweise große Verlängerung der Lebenszeit bereits bei vergleichsweise geringer Verminderung der Betriebsspannung der Lichtquelle erreicht werden kann. Weiter hat dies den Vorteil, dass die für photometrische Messungen benötige spektrale Lichtverteilung und Lichtmenge besonders einfach und kostengünstig zur Verfügung gestellt werden kann.

Die Höhe der zweiten Betriebsspannung kann dabei von spezifischen Eigenschaften der Halogenlampe abhängen. Vorteilhafterweise wird der Halogenzyklus beim Betrieb der Halogenlampe im ersten Bereitschaftsmodus mit der zweiten Betriebsspannung nicht gestört bzw. nicht zu lange gestört. Vorteilhafterweise wird die Halogenlampe nur für einen begrenzten Zeitraum mit der zweiten Betriebsspannung betrieben und dann automatisch ausgeschaltet oder wieder mit der ersten Betriebsspannung betrieben. Vorteilhafterweise wird die Halogenlampe dann zunächst mindestens einen bestimmten Zeitraum mit der ersten Betriebsspannung betrieben, bevor wieder eine Reduktion der Betriebsspannung auf die zweite Betriebsspannung erfolgen kann.

In weiterer bevorzugter Ausführungsform der Erfindung umfasst die Lichtquelle mindestens eine Kryptonlampe.

In weiterer bevorzugter Ausführungsform der Erfindung erfolgt die Reduktion und Erhöhung der Betriebsspannung der Lichtquelle lokal an der Messeinheit. Dies hat den Vorteil, dass auf aufwändige zusätzliche Verdrahtung im Analyzer verzichtet werden kann.

In bevorzugter Ausführungsform des Verfahrens umfasst das Verfahren weiter die Verfahrensschritte
- Ausschalten der Lichtquelle bei der Aktivierung eines zweiten Bereitschaftsmodus aus dem Normalbetriebsmodus oder aus dem ersten Bereitschaftsmodus des Analysegeräts und
- Einschalten der Lichtquelle und Betrieb der Lichtquelle bei der ersten Betriebsspannung bei der Aktivierung des Normalbetriebsmodus aus dem zweiten Bereitschaftsmodus des Analysegeräts, oder
- Einschalten der Lichtquelle und Betrieb der Lichtquelle bei der zweiten Betriebsspannung bei der Aktivierung des ersten Bereitschaftsmodus aus dem zweiten Bereitschaftsmodus des Analysegeräts.

Dies hat den Vorteil, dass in Situationen, in denen eine entsprechend längere zeitliche Verzögerung, bis die Lichtquelle für photometrische Messungen zur Verfügung steht toleriert werden kann, die Lebensdauer der Lichtquelle weiter verlängert, und gleichzeitig eine noch größere Menge an Strom, Stromkosten und natürlichen Ressourcen eingespart werden kann. Weiter ist besonders vorteilhaft, dass somit das automatische Analysegerät je nach Situation besonders flexibel betrieben werden kann.

Vorteilhafterweise steuert die Steuereinheit zur Steuerung der Betriebsspannung der Lichtquelle einen elektrischen Schalter, der die Lichtquelle von der Spannungsversorgung beim Betrieb des automatischen Analysegeräts im zweiten Bereitschaftsmodus trennt. Diese Trennung erfolgt im Zuge des Ausschaltens der Lichtquelle beim Übergang in den zweiten Bereitschaftsmodus.

Die Initiierung des ersten oder zweiten Bereitschaftsmodus kann aktiv durch den Befehl eines Benutzers oder automatisch nach einer vorgegebenen Zeit der Inaktivität des automatischen Analysegeräts erfolgen. Durch letztere Variante wird ebenfalls der Stromverbrauch reduziert, da auch bei einem Vergessen des Benutzers der entsprechende Bereitschaftsmodus aktiviert wird. Vorteilhafterweise wird bei letzterer Variante zunächst nach einer gewissen Zeit der Inaktivität der erste Bereitschaftsmodus aktiviert und nach einer gewissen weiteren Zeit der fortgesetzten Inaktivität der zweite Bereitschaftsmodus aktiviert.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Bei einer Küvette handelt es sich beispielsweise um eine Messküvette oder ein Reaktionsgefäß aus Glas, Kunststoff oder Metall. Vorteilhafterweise ist die Messküvette aus optisch transparenten Materialien gefertigt, was besonders beim Einsatz von optischen Analyseverfahren vorteilhaft sein kann. Vorteilhafterweise ist die Küvette als Durchflussküvette ausgestaltet.

Die Erfindung wird anhand von Zeichnungen näher erläutert. Darin zeigen:
- FIG 1: eine schematische Darstellung des Verlaufs der Betriebsspannung der Lichtquelle beim Betrieb des automatischen Analysegeräts im Normalbetriebsmodus (8) und im ersten (7) Bereitschaftsmodus, und
- FIG 2: eine schematische Darstellung des Verlaufs der Betriebsspannung der Lichtquelle beim Betrieb des automatischen Analysegeräts im Normalbetriebsmodus (8), im ersten (7) Bereitschaftsmodus und im zweiten (10) Bereitschaftsmodus.

Gleiche Gegenstände sind in beiden Figuren mit denselben Bezugszeichen versehen.

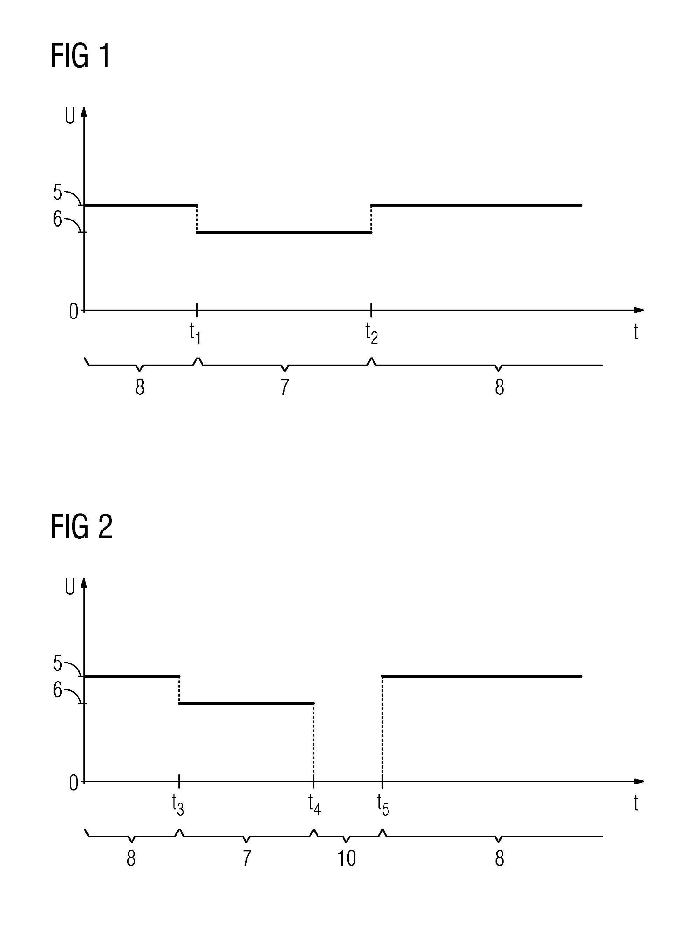

Die Lichtquelle, deren Betriebsspannungsverlauf in FIG 1 und FIG 2 dargestellt ist, ist Teil einer Messeinheit mit einem Detektor, wobei sich die Messeinheit in einem automatischen Analysegerät befindet und photometrische Messungen an einer Probe, die sich in einer Küvette befindet, durchführen kann und wobei die Lichtquelle eine Spannungsversorgung umfasst.

FIG 1 zeigt schematisch den Verlauf der Betriebsspannung der Lichtquelle beim Betrieb des automatischen Analysegeräts im Normalbetriebsmodus (8) und im ersten (7) Bereitschaftsmodus. U bezeichnet die Betriebsspannung der Lichtquelle, t bezeichnet die Zeit. Zunächst wird das automatische Analysegerät im Normalbetriebsmodus (8) bis zum Zeitpunkt t1 betrieben und die Betriebsspannung der Lichtquelle beträgt die erste (5) Betriebsspannung. Zum Zeitpunkt t1 wird der erste (7) Bereitschaftsmodus aktiviert, und die Betriebsspannung der Lichtquelle wird auf die zweite (6) Betriebsspannung reduziert, die 90 % der ersten (8) Betriebsspannung beträgt. Vom Zeitpunkt t1 bis zum Zeitpunkt t2 wird das automatischen Analysegeräts im ersten (7) Bereitschaftsmodus betrieben. Zum Zeitpunkt t2 wird der Normalmodus (8) aktiviert und die Betriebsspannung der Lichtquelle wird auf die erste (5) Betriebsspannung erhöht. Ab dem Zeitpunkt t2 wird das automatischen Analysegeräts im Normalmodus (8) betrieben.

FIG 2 zeigt schematisch den Verlauf der Betriebsspannung der Lichtquelle beim Betrieb des automatischen Analysegeräts im Normalbetriebsmodus (8), im ersten (7) Bereitschaftsmodus und im zweiten (10) Bereitschaftsmodus. Zunächst wird das automatische Analysegerät im Normalbetriebsmodus (8) bis zum Zeitpunkt t3 betrieben und die Betriebsspannung der Lichtquelle entspricht der ersten (5) Betriebsspannung. Zum Zeitpunkt t3 wird der erste (7) Bereitschaftsmodus aktiviert und die Betriebsspannung der Lichtquelle wird auf die zweite (6) Betriebsspannung verringert, die 90 % der ersten (5) Betriebsspannung beträgt. Vom Zeitpunkt t3 bis zum Zeitpunkt t4 wird das automatischen Analysegeräts im ersten (7) Bereitschaftsmodus betrieben.

Zum Zeitpunkt t4 wird der zweite (10) Bereitschaftsmodus aktiviert, und die Betriebsspannung der Lichtquelle wird ausgeschaltet. Vom Zeitpunkt t4 bis zum Zeitpunkt t5 wird das automatischen Analysegeräts im zweiten (10) Bereitschaftsmodus betrieben. Zum Zeitpunkt t5 wird der Normalbetriebsmodus (8) aktiviert und die Betriebsspannung der Lichtquelle wird auf die erste (5) Betriebsspannung erhöht. Ab dem Zeitpunkt t5 wird das automatischen Analysegeräts im Normalmodus (8) betrieben.

### BEZUGSZEICHENLISTE

- 5: erste Betriebsspannung
- 6: zweite Betriebsspannung
- 7: erster Bereitschaftsmodus
- 8: Normalbetriebsmodus
- 10: zweiter Bereitschaftsmodus

## Patentansprüche

1. Verfahren zum Betrieb eines automatischen Analysegeräts in voneinander unterschiedlichen Betriebsmodi, das Analysegerät umfassend eine Messeinheit mit einer Lichtquelle zur photometrischen Messung einer Probe und eine Steuereinheit zur Steuerung der Betriebsspannung der Lichtquelle, das Verfahren umfassend die Verfahrensschritte
a. Betrieb der Lichtquelle mit einer ersten (5) Betriebsspannung im Normalbetriebsmodus (8) des Analysegeräts,
b. Verringern der an der Lichtquelle anliegenden ersten (5) Betriebsspannung auf eine zweite (6) Betriebsspannung bei der Aktivierung des ersten (7) Bereitschaftsmodus aus dem Normalbetriebsmodus (8) des Analysegeräts
c. Betrieb der Lichtquelle mit der zweiten (6) Betriebsspannung im ersten (7) Bereitschaftsmodus des Analysegeräts,
**dadurch gekennzeichnet, dass** die zweite (6) Betriebsspannung 60 % bis 95 % der ersten (5) Betriebsspannung beträgt.

2. Verfahren nach Anspruch 1, umfassend weiter den Verfahrensschritt
d. Erhöhung der an der Lichtquelle anliegenden zweiten (6) Betriebsspannung auf die erste (5) Betriebsspannung bei der Aktivierung des Normalbetriebsmodus (8) aus dem ersten (7) Bereitschaftsmodus des Analysegeräts.

3. Verfahren nach einem der vorhergehenden Ansprüche, wobei die zweite (6) Betriebsspannung 85 % bis 95 % der ersten (5) Betriebsspannung beträgt.

4. Verfahren nach einem der vorhergehenden Ansprüche, wobei die zweite (6) Betriebsspannung 90 % der ersten (5) Betriebsspannung beträgt.

5. Verfahren nach einem der vorhergehenden Ansprüche, wobei die Lichtquelle mindestens eine Halogenlampe umfasst.

6. Verfahren nach einem der vorhergehenden Ansprüche, wobei die Reduktion und Erhöhung der Betriebsspannung der Lichtquelle lokal an der Messeinheit erfolgt.

7. Verfahren nach einem der vorhergehenden Ansprüche, umfassend weiter die Verfahrensschritte e. Ausschalten der Lichtquelle bei der Aktivierung eines zweiten (10) Bereitschaftsmodus aus dem Normalbetriebsmodus (8) oder aus dem ersten (7) Bereitschaftsmodus des Analysegeräts und
f. Einschalten der Lichtquelle und Betrieb der Lichtquelle bei der ersten (5) Betriebsspannung bei der Aktivierung des Normalbetriebsmodus (8) aus dem zweiten (10) Bereitschaftsmodus des Analysegeräts, oder
g. Einschalten der Lichtquelle und Betrieb der Lichtquelle bei der zweiten (6) Betriebsspannung bei der Aktivierung des ersten (7) Bereitschaftsmodus aus dem zweiten (10) Bereitschaftsmodus des Analysegeräts.

8. Automatisches Analysegerät mit einer Messeinheit mit einer Lichtquelle zur photometrischen Messung einer Probe und mit einer Steuereinheit, wobei die Steuereinheit so konfiguriert ist, dass sie ein Verfahren nach einem der vorhergehenden Ansprüche steuert.
